# EUROPÄISCHE PATENTANMELDUNG

(11) **EP 1 811 084 A2**
(43) Veröffentlichungstag der Anmeldung: **25.07.2007**
(21) Anmeldenummer: 06122731.0
(22) Anmeldetag: 23.10.2006
(51) Int. Cl.: D21H 23/22

(54) **Verfahren und Vorrichtung zum Entgasen eines flüssigen bis pastösen Mediums**

(30) Priorität: 16.12.2005 DE 102005060848
(71) Anmelder: Voith Paper Patent GmbH, 89522 Heidenheim (DE)
(72) Erfinder: Fröhlich, Uwe, 89231, Neu-Ulm (DE); Schachtl, Martin, 84172, Buch am Erlbach (DE)

(57) **Zusammenfassung**

Bei einem Verfahren zum Entgasen eines flüssigen bis pastösen Mediums (1), insbesondere einer Streichfarbe zum Beschichten von Papier oder Karton, wobei das zu entgasende Medium (1) in einen Vakuumentgaser (10) eingeleitet und dabei entgast wird und wobei Gas und das entgaste Medium (1 b) getrennt voneinander abgeführt werden, ist erfindungsgemäß vorgesehen, dass das zu entgasende Medium (1) unmittelbar vor der Entgasung im Vakuumentgaser (10) einer Entgasung in einem an sich bekannten Zyklonentgaser (4) unterworfen wird, wobei ein entstehender gashaltiger Volumenstrom (7) bzw. Schaum und ein Volumenstrom an vorentgastem Medium (1a) ebenfalls getrennt voneinander abgeführt werden.

Die Erfindung betrifft auch eine Vorrichtung zur Durchführung des Verfahrens.

## Beschreibung

Die Erfindung betrifft ein Verfahren und eine Vorrichtung, insbesondere einer Streichfarbe zum Beschichten von Papier oder Karton, wobei das zu entgasende Medium in einen Vakuumbehälter eingeleitet und dabei weitgehend entgast wird, wobei Gas und das weitgehend entgaste Medium getrennt voneinander abgeführt werden.

Bei dem Medium handelt es sich, wie gesagt, insbesondere um Streichfarbe, mit der vor allem eine Papier-, Karton- oder andere Faserstoffbahn während ihres Herstellungs- oder Veredelungsprozesses zum Zwecke der Verbesserung ihrer Bedruckbarkeit und der optischen Eigenschaften gestrichen werden soll.
Die Streichfarbe besteht im allgemeinen aus wässriger Pigmentdispersion, welche mit einer bestimmten Filmdicke möglichst gleichmäßig aufgetragen und danach getrocknet wird.

Während des Aufbereitungsprozesses des Mediums, d.h. der Streichfarbe, gelangt Gas bzw. Luft in das Medium. Hieraus bilden sich Blasen, die beim Streichen der Bahn zerplatzen und auf der Oberfläche der Bahn freie Stellen hinterlassen. Der aufgebrachte sogenannte "Strich" ist dann nicht mehr einheitlich. Dabei stören bereits Mikroblasen mit einem Durchmesser von wenigen Mikrometern, vor allem bei Strichfilmen geringer Stärke.

In der Praxis werden unterschiedliche Methoden der Entgasung von Streichfarben eingesetzt.

Bei sogenannten Freistrahldüsenauftragswerken, kommen oftmals mechanische Entlüfter, die auf einem Wirbelstrom- bzw. Zyklonprinzip arbeiten zum Einsatz. Dabei lassen sich Gasblasen mit einer Größe von 200 µm entfernen. Kleinere Gasblasen bleiben in der Streichfarbe oder werden durch die relativ hohen Scherkräfte im Zyklon noch verkleinert, wodurch sie im Freistrahl nicht mehr störend sind.
Der Wirkungsgrad der Zyklonentgaser liegt bei ca. 40 bis 70%, so dass selbst nach Passieren des Entgasers noch Gas bzw. Luft in der Streichfarbe enthalten ist.
Da sehr große Gasblasen hundertprozentig entfernt werden und nur diese großen Blasen beim Freistrahlauftrag stören, reicht der Wirkungsgrad für diese Art des Beschichtens aus.

Zyklonentgaser sind auch aus dem Patentschriftenfonds bekannt und zwar beispielsweise aus der EP-A1 0618012 und der US 5,080,792. Bei derartigen Zyklonen wird das zu entgasende Medium exzentrisch in einen feststehenden Behälter eingeleitet, so dass sich im Innenraum des Behälters eine Wirbelbewegung des Mediums einstellt. Die durch diese Wirbelbewegung hervorgerufene Zentrifugalkraft sorgt unter Ausnutzung der Dichteunterschiede zwischen dem zu entgasenden Medium einerseits und dem darin eingeschlossenen Gas andererseits für eine Entmischung von Medium und Gas.

Die Anforderungen an die Entgasung sind aber weiter gestiegen. Das liegt daran, dass die zu entgasenden Medien inzwischen Eigenschaften haben, die eine Entgasung schwieriger machen, weil sie höhere Feststoffgehalte und höhere Viskositäten aufweisen. Auch sind die Qualitätsanforderungen an die Auftragsschicht gestiegen und auch die Art des Beschichtens verlangt ein besonders weitgehend entgastes Medium.

Zunehmend sollen Faserstoffbahn mit Hilfe des Vorhang-Auftragsverfahrens (Curtain Coating) beschichtet werden. Bei dieser Beschichtungsart wird das Auftragsmedium in der Menge, in der es auch auf der Faserstoffbahn verbleiben soll, im freien Fall, d.h. in Form eines frei fallenden und geschlossenen Vorhanges, auf die Faserstoffbahn aufgebracht. Damit dieser empfindliche und dünne Vorhang im geschlossenen und stabilen Zustand die Faserstoffbahn auch erreicht und dort eine einwandfreie Auftragsschicht erzeugt, sind die Anforderungen an das Auftragsmedium (Streichfarbe) extrem hoch, weshalb ein besonders weitgehend entgastes Medium notwendig ist.

Vom Unternehmen der Anmelderin wurden mit selbem Anmeldetag Vakuumentgaser vorgeschlagen. Das Funktionsprinzip dieser Entgaser beruht dabei auf der Erzeugung von dünnen Schichten an zu entgasendem Medium, die den Vakuumentgaser auf einen möglichst langen Weg durchlaufen. Der Absolutdruck im Vakuumentgaser beträgt dabei zwischen 10 und 300 mbar, insbesondere zwischen 30 und 100 mbar.
Man hat gefunden, dass der Wirkungsgrad dieser vorgeschlagenen Vakuumentgaser sehr viel besser ist, als der der bekannten Zyklonentgaser. Der Wirkungsgrad beträgt ca. 95 bis 99%.

Aus der DE-A1 10252807 der Anmelderin ist eine Vorrichtung bekannt, bei der einer Entgasungseinrichtung mindestens eine weitere nachgeordnet ist, wobei alle hintereinander und/oder parallel zueinander angeordneten Entgasungseinrichtungen Vakuumentgaser sind.

Allerdings hat man festgestellt, dass immer noch Gasgehalte - wenn auch nur sehr kleine- zu verzeichnen sind, die weiterhin zu Qualitätsstörungen der Auftragsschicht auf der Faserstoffbahn, insbesondere solcher aus Papier, führen.

In vielen Fällen reicht daher der Abscheidegrad des einen Vakuumentgasers oder der Mehrzahl an Vakuumentgasern nicht aus, um eine optimale Entgasung bzw. Entlüftung zu gewährleisten.

Der Erfindung liegt daher die Aufgabe zugrunde, ein Verfahren und eine Vorrichtung anzugeben, mit denen eine noch bessere Entgasung möglich ist.

Die Aufgabe wird erfindungsgemäß mit einem Verfahren entsprechend dem Anspruch 1 gelöst und zwar derart, dass vor der Entgasung im an sich bekannten Vakuumbehälter das zu entgasende Medium zusätzlich wenigstens einer Entgasung in einem an sich bekannten Zyklonentgaser unterworfen wird, wobei ein entstehender gashaltiger Volumenstrom bzw. Schaum und ein Volumenstrom an entgastem Medium ebenfalls getrennt voneinander abgeführt werden. Dieses durch Wirbelstrom bzw. Zyklonentgasung vorentgaste Medium wird nun einem Vakuumentgaser zugeführt.

Die Erfinder haben erkannt, dass durch eine Kombination von Zyklonentgasung bzw. Zyklonentlüftung und Vakuumentgasung bzw. Vakuumentlüftung der Gasgehalt in der Streichfarbe so reduzierbar ist, dass im Endeffekt keine durch einen Gasgehalt hervorgerufenen sichtbaren Störungen mehr auf der Bahnoberfläche vorhanden sind.

Mit der vorausgehenden Zyklonentgasung wird der größte Teil des Gases bzw. der Luft ohne großen Energieaufwand herausgeholt. Mit der sich anschließenden Vakuumentgasung werden die noch enthaltenen kleinen Gasblasen in ihrem Durchmesser vergrößert und entfernt. Das erfolgt in einem solchen Grad und in überraschender Weise soweit, dass keine sichtbaren Störungen in der Auftragsschicht mehr vorhanden sind.
Sehr zweckmäßig ist es deshalb, wenn die der Zyklonentgasung folgende Vakuumentgasung unmittelbar vor einer Vorhang- Beschichtung durchgeführt wird, weil sich damit beste Auftragsergebnisse auf dem Substrat bzw. der laufenden Faserstoffbahn erzielen lassen.

Da der Zyklonentgaser einen bestimmten Differenzdruck zwischen Ein- und Auslass benötigt, um ein optimales Ergebnis zu erzielen, sollte dieser Differenzdruck zwischen 1 und 4 bar, vorzugsweise zwischen 1,5 und 2,5 bar liegen.

Die bei der Zyklonentgasung abgetrennten Gasblasen werden über eine Schaumleitung nach außen entfernt. Der Volumenstrom an dieser gashaltigen Fraktion liegt unter 15% des Gesamtvolumenstromes, insbesondere im Bereich zwischen 1 und 10%.
Dieser abgetrennte Volumenstrom kann sowohl verworfen werden, als auch in einen Arbeits- und Sammelbehälter zurückgeführt werden, um ihn danach erneut im Kreislauf den besagten Entgasungsschritten zu unterwerfen.

In diesem Zusammenhang ist es alternierend möglich, bei der Rückführung in den Arbeitsbehälter den Volumenstrom vorher noch in einem weiteren Vakuum- oder Zyklonentgaser zu entgasen. Damit kann man Verluste an Streichfarbe möglichst gering halten. Diese Maßnahme ist vor allem bei sehr teuren Spezialpapierfarben sinnvoll.

Das so hergestellte im Wesentlichen gasfreie Medium, vor allem pigmenthaltige Streichfarbe, kann nun einer dem Vakuumentgaser nachgeordneten Beschichtungseinrichtung zugeführt werden. Bevorzugt ist dabei an ein Vorhang-Auftragswerk (Curtain Coater) als Beschichtungseinrichtung gedacht. Das Vorhang-Streichen ist nämlich ein sehr Bahn- schonendes und Auftragsmedium- sparendes Auftragsverfahren, weil keine Vorrichtungsteile des Coaters die Bahn berühren und nur soviel an Auftragsmedium aufzubringen ist, wie auf der Bahn bzw. dem Substrat auch verbleiben soll.

Aufgrund der Erfindung können selbst hochviskose Auftragsmedien mit Hilfe des Vorhang- Streichens (Curtain Coating) auf eine laufende Papier-, Karton- oder andere Bahn aufgebracht werden.

Die Aufgabe der Erfindung wird auch mit einer Vorrichtung zur Durchführung des Verfahrens gelöst.

Gemäß Vorrichtungs- Anspruch 7 ist dem an sich bekannten Vakuumbehälter ein ebenso an sich bekannter Zyklonentgaser vorgeschaltet.

Der Zyklonentgaser weist einen Einlass für das zu entgasende Medium, eine Abführleitung für einen entstehenden gashaltigen Volumenstrom, sowie einen Auslass und eine Abzugsleitung für das vorentgaste Medium auf.

Eine weitere sehr vorteilhafte Ausbildung der Vorrichtung kann darin bestehen, dass der Zyklonentgaser wenigstens eine vom zu entgasenden Medium durchströmte Einheit aufweist.

Bei Anordnung von mehreren vom zu entgasenden Medium durchströmten Einheiten sind in vorteilhafter Weise, diese Einheiten für unterschiedliche Durchflussvolumen, beispielsweise 10 l/min, 5 I/min und 2,5 l/min ausgelegt.

In bestimmten Fällen kann es aber auch vorteilhaft sein, wenn die mehreren Einheiten jeweils gleich große Durchflussvolumen aufweisen.

Beispielsweise können vier Einheiten parallel durchströmt sein. Die einzelnen Einheiten lassen sich durch Ventile zu- und abschalten. Damit erreicht man eine hohe Flexibilität beim Durchfluss und kann trotzdem einen Differenzdruck zwischen Ein- und Auslass des Zyklonentgasers erreichen.

Als Differenzdruck zwischen dem Einlass und dem Auslass des Zyklonentgasers sind zwischen 1 und 4 bar, vorzugsweise zwischen 1,5 bis 2,5 bar vorgesehen.

Eine weitere vorteilhafte Lösung kann darin bestehen, mehrere Zyklonentgaser in Serie vor dem Vakuumentgaser zu installieren. Hierdurch wird die Entgasungswirkung weiter verbessert.

In diesem Zusammenhang kann ebenso vorteilhaft sein, mehrere parallel geschaltete Vakuumentgaser zu installieren.

Der Vorteil der Erfindung besteht in einer sehr weitgehenden Entlüftung des vorhandenen Mediums. Bei Streichfarben sind keine sichtbaren Störungen auf der Bahnoberfläche zu verzeichnen, wodurch eine höhere Auftragsqualität als bisher erreicht wird.

Nachfolgend soll die Erfindung anhand eines Ausführungsbeispieles beschrieben werden.

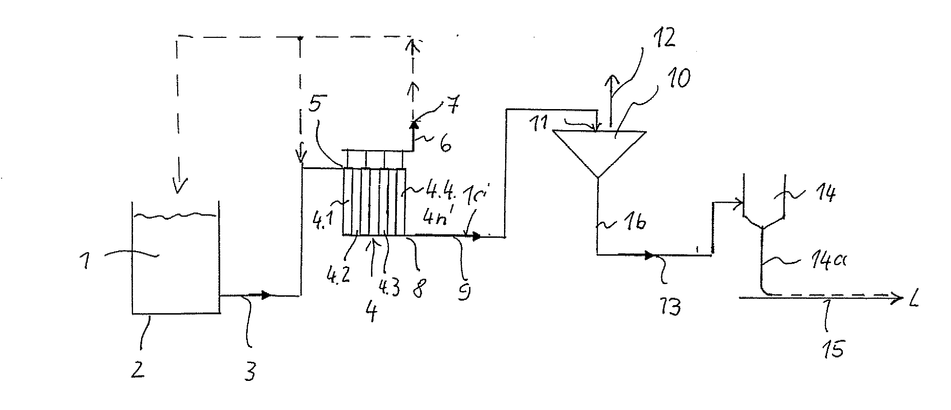

Figur 1 zeigt grob schematisch den Verfahrensablauf bzw. eine erfindungsgemäße Vorrichtung zum Entgasen

In der Figur 1 ist dargestellt, wie ein flüssiges bis pastöses Medium 1, d.h. ein Auftrags- bzw. Streichmedium in Form einer hochviskosen Streichfarbe zur Veredelung einer laufenden Papier- oder Kartonbahn vor der Beschichtung entgast wird.

Die gezeigte Vorrichtung weist einen Arbeitsbehälter 2, in dem das zu entgasende Medium 1 bevorratet ist, auf.

Das Medium 1 wird zunächst über eine Leitung 3 in Pfeilrichtung einem ersten Entgaser, nämlich einem Zyklonentgaser 4 zugeführt. Die Zufuhr erfolgt tangential, wodurch sich das spezifisch leichtere Gas bzw. die enthaltene Luft im Zentrum des durch einen Wirbelstrom hervorgerufenen Strudels sammeln kann und sich leicht abführen lässt.

Der Zyklonentgaser 4 weist also einen tangentialen Einlass 5 für das zu entgasende Medium 1, eine Abführleitung 6 für einen entstehenden gashaltigen Volumenstrom bzw. Schaum 7, sowie einen Auslass 8 und eine Abzugsleitung 9 für das vorentgaste Medium 1a auf.

In der Figur 1 ist durch senkrechte Striche innerhalb des Zyklonentgasers 4 angedeutet, dass dieser Entgaser 4 in einzelne Einheiten unterteilt sein kann. Wenigstens ist eine Einheit vorgesehen, im Beispiel sind allerdings vier Stück. Die einzelnen Einheiten werden vom zu entgasenden Medium 1 parallel durchströmt und sind mit 4.1; 4.2; 4.3 und 4.4 bezeichnet. Einzelne Einheiten bzw. einzelne Zyklone 4.1 bis 4.4 (bzw. auch 4.n bei noch weiteren Zykloneinheiten) können dann je nach aktuellem Durchfluss zu- oder abgeschaltet werden.

Durch diese Ausgestaltung erreicht man mehr Flexibilität beim Durchfluss und kann dennoch einen notwendigen Differenzdruck von ca. 2bar erreichen.

In jeder Einheit sind die gewünschten Durchflussvolumen einstellbar. In der ersten Einheit 4.1 sind im Beispiel 10 I/min, in der zweiten Einheit 4.3 sind 5 I/min und in den weiteren Einheiten 4.3 und 4.4 sind jeweils 2,5 I/min durch nicht mit eingezeichnete Ventile zu- und abschaltbar.

Da die sich ergebende Druckdifferenz auch von der Viskosität der jeweiligen Streichfarbe abhängt, lässt sich mit dieser Ausführung die Druckdifferenz für eine große Bandbreite an Viskositäten einstellen.

Schließlich wird vom Boden des Zyklonentgasers 4 über eine Abfuhrleitung 9 das vorentgaste Medium 1a einem nachgeordneten Vakuumentgaser 10 zugeführt.

Am Deckel des Vakuumentgasers 10 ist ein Einlass 11 für das zu vorentgaste Medium 1a und außerdem ein Vakuumanschluss bzw. Unterdruckerzeuger 12 vorgesehen.

Der Vakuumentgaser 10 kann verschieden Bauformen und Innengestaltungen zum Zwecke der Erzielung einer verlängerten Durchlaufstrecke und der Erzielung einer zu entgasenden Dünnschicht- ohne aber die Behältergeometrie zu vergrößern, aufweisen.
Möglich sind Einbauten in Form einer zentrisch angeordneten, vertikalen Antriebswelle mit zumindest einem koaxial angeordneten Drehteller mit Umdrehungszahlen von ca. 2500 1/min, oder die Anordnung von Hochrotationszerstäuberdüsen mit Drehzahlen bis zu 20000 1/min zur Zufuhr des Mediums, der Einbau von Ablaufrutschen auch in Kaskadenform und dergleichen, auf die hier allerdings nicht näher eingegangen werden soll.

Der absolute Druck im Vakuumentgaser 10 wird auf ca.100 bis 300 mbar, vorzugsweise 1-100 mbar eingestellt. Bei einer Temperatur von 30 bis 50°C des Mediums 1 erfolgt dann die restliche Entgasung, wobei man ein praktisch gasfreies Medium 1b. erhält. Dieses entgaste Medium 1b wird über eine Abzugsleitung 13 in Pfeilrichtung einer dem Vakuumentgaser 10 unmittelbar nachgeordneten Beschichtungseinrichtung, insbesondere einem Vorhang- Auftragswerk 14 zugeführt. Der Ausdruck "praktisch gasfrei" bedeutet, dass realistischer Weise keine 100%ige Entgasung möglich ist. Geringste Restmengen dürfen noch enthalten sein, sind aber durch die erfindungsgemäße zusätzliche Installation des wenigstens einen Zyklonentgasers 4 so gering, dass es im Endeffekt auf der Oberfläche einer mit dem Auftragswerk 14 und dessen abgegebenen Vorhang 14a beschichteten Faserstoffbahn 15 aus Papier oder Karton nicht mehr zu gasbedingten Defekten kommt.

In Versuchen wurde festgestellt, dass nach zusätzlichem Einbau eines Zyklonentgasers vor dem Vakuumentgaser sofort eine visuelle Abnahme an Luftblasen im Vorhang 14a erkennbar war. Außerdem war auch eine Verringerung der Luftblasenanzahl in der Ablaufwanne für den Vorhang erkennbar.

Es versteht sich, dass in den Verfahrensablauf bzw. die dafür vorgesehene Vorrichtung Pumpen, Filter und auch Pulsationsdämpfer eingebaut sind, die aufgrund ihrer Bekanntheit hier nicht extra dargestellt sind. Ebenfalls wurde auf das Einzeichnen der einzelnen Zulauf- und Absperrventile verzichtet.

### Bezugszeichenliste

- 1: zu entgasendes Medium, Streichfarbe
- 1a: vorentgastes Medium
- 1b: praktisch gasfreies Medium
- 2: Arbeitsbehälter
- 3: Leitung
- 4: Zyklonentgaser
- 4.1: Einheit
- 4.2: Einheit
- 4.3: Einheit
- 4.4: Einheit
- 4.n: Einheit
- 5: Einlass
- 6: Abführleitung
- 7: gashaltiger Volumenstrom bzw. Schaum
- 8: Auslass
- 9: Abzugsleitung
- 10: Vakuumentgaser
- 11: Einlass für vorentgastes Medium
- 12: Vakuumanschluss
- 13: Abzugsleitung
- 14: Vorhang-Auftragswerk
- 14a: Vorhang
- 15: Faserstoffbahn

## Patentansprüche

1. Verfahren zum Entgasen eines flüssigen bis pastösen Mediums (1), insbesondere einer Streichfarbe zum Beschichten von Papier oder Karton, wobei das zu entgasende Medium (1) in einen Vakuumentgaser (10) eingeleitet und dabei entgast wird und wobei Gas und das entgaste Medium (1 b) getrennt voneinander abgeführt werden,
**dadurch gekennzeichnet, dass**
das zu entgasende Medium (1) unmittelbar vor der Entgasung im Vakuumentgaser (10) einer Entgasung in einem an sich bekannten Zyklonentgaser (4) unterworfen wird, wobei ein entstehender gashaltiger Volumenstrom (11) bzw. Schaum und ein Volumenstrom an vorentgastem Medium (1a) ebenfalls getrennt voneinander abgeführt werden.

2. Verfahren nach Anspruch 1,
**dadurch gekennzeichnet, dass**
die Entgasung im Vakuumentgaser (10) unmittelbar vor der Beschichtung von Papier oder Karton vorgenommen wird.

3. Verfahren nach Anspruch 2,
**dadurch gekennzeichnet, dass**
die Beschichtung mit einem an sich bekannten Vorhang- Auftragswerk (14) erfolgt, dem der Volumenstrom an entgastem Medium (1 b) zugeführt wird.

4. Verfahren nach Anspruch 1,
**dadurch gekennzeichnet, dass**
der gashaltige Volumenstrom (7) des wenigstens einen Zyklonentgasers (4) kleiner als 15%, vorzugsweise im Bereich zwischen 1 bis 10% des Gesamtvolumenstromes beträgt.

5. Verfahren nach Anspruch 1 oder 2,
**dadurch gekennzeichnet, dass**
zwischen Einlass (5) und Auslass (8) des Zyklonentgasers (4) ein Differenzdruck zwischen 1 und 4 bar, vorzugsweise 1,5 bis 2,5 bar eingestellt wird.

6. Verfahren nach einem der Ansprüche 1 bis 5,
**dadurch gekennzeichnet, dass**
der gashaltige Volumenstrom (7) in einen Arbeitsbehälter (1) eingeleitet wird und danach erneut im Kreislauf den einzelnen Entgasungsschritten (4; 10) unterworfen wird oder auch verworfen oder auch vor Einleitung in den Arbeitsbehälter (1) in einem der Entgaser (4; 10) entgast wird.

7. Vorrichtung zur Durchführung des Verfahrens nach Anspruch 1 mit einem Vakuumentgaser (10), der einen Einlass (11) für das zu entgasende Medium (1) sowie einen Vakuumanschluss bzw. Unterdruckerzeuger (12) und einen Auslass bzw. Abzugsleitung (13) für praktisch gasfreies Medium (1 b) aufweist,
**dadurch gekennzeichnet, dass**
dem Vakuumentgaser (10) wenigstens ein Zyklonentgaser (4) vorgeschaltet ist.

8. Vorrichtung nach Anspruch 7,
**dadurch gekennzeichnet, dass**
der wenigstens eine Zyklonentgaser (4) einen Einlass (5) für das zu entgasende Medium (1), eine Abführleitung (6) für einen entstehenden gashaltigen Volumenstrom (7), sowie einen Auslass (8) und eine Abzugsleitung (9) für das vorentgaste Medium (1a) aufweist.

9. Vorrichtung nach Anspruch 7 oder 8,
**dadurch gekennzeichnet, dass**
der wenigstens eine Zyklonentgaser (4) wenigstens eine vom zu entgasenden Medium (1) durchströmte Einheit (4.1; 4.2; 4.3; 4.4...4.n) aufweist.

10. Vorrichtung nach Anspruch 9,
**dadurch gekennzeichnet, dass**
mehrere vom zu entgasenden Medium (1) durchströmte Einheiten (4.1; 4.2; 4.3; 4.4...4.n) des Zyklonentgasers (4) vorgesehen sind, wobei diese Einheiten für unterschiedliche Durchflussvolumen, beispielsweise 10 l/min, 5 l/min und 2,5 l/min ausgelegt sind und durch Ventile zu- und abschaltbar sind.

11. Vorrichtung nach Anspruch 9,
**dadurch gekennzeichnet, dass**
mehrere vom zu entgasenden Medium (1) durchströmte Einheiten (4.1; 4.2; 4.3; 4.4...4.n) des Zyklonentgasers (4) vorgesehen sind, wobei diese Einheiten für gleich große Durchflussvolumen ausgelegt sind und die durch Ventile zu- und abschaltbar sind.

12. Vorrichtung nach Anspruch 10 oder 11,
**dadurch gekennzeichnet, dass**
durch das Zu- und Abschalten einzelner Zykloneinheiten (4.1; 4.2; 4.3; 4.4...4.n) eine Druckdifferenz zwischen 1 und 4 bar, vorzugsweise 1,5 bis 2,5 bar einstellbar ist.

13. Vorrichtung nach einem der Ansprüche 7 bis 12,
**dadurch gekennzeichnet, dass**
über eine Abzugsleitung (13) des Vakuumentgasers (10) das entgaste bzw. praktisch gasfreie Medium (1 b) einer unmittelbar nachgeordneten Beschichtungseinrichtung, insbesondere einem Vorhang- Auftragswerk (14) zuführbar ist, mit dem bzw. dessen abgegebenen frei fallendem Vorhang (14a) wenigstens eine Seite einer in Laufrichtung L laufende Faserstoffbahn (15) zu beschichten ist.
